# FASCICULE DE BREVET EUROPEEN

(11) **EP 0 369 896 B1**
(45) Date de publication et mention de la délivrance du brevet: **31.03.1993**
(21) Numéro de dépôt: 89420397.5
(22) Date de dépôt: 17.10.1989
(51) Int. Cl.: G11B 5/84, B29C 67/16, B29C 67/18, B29C 59/02

(54) **Procédé de traitement de surface de couches magnétiques**
Verfahren zur Behandlung der Oberfläche von Magnetschichten
Process for treating the surfaces of magnetic layers

(30) Priorité: 18.10.1988 FR 8814220
(43) Date de publication de la demande: 23.05.1990
(73) Titulaire: KODAK-PATHE, F-75594 Paris Cedex 12 (FR)
(72) Inventeur: Delmar, Jean-Claude Hugues Louis, 71102 Chalon sur Saone Cedex (FR)
(74) Mandataire: Buff, Michel

(56) Documents cités:
- EP-A- 0 139 403
- EP-A- 0 244 868
- DE-A- 2 747 797
- DE-A- 3 727 197
- FR-A- 2 120 070
- US-A- 4 391 851

## Description

La présente invention concerne un procédé de traitement de surface d'une couche magnétique appliquée sur un support tel que, par exemple, du PVC ou du polycarbonate, et plus particulièrement le glaçage et le compactage de la couche magnétique.

Les applications de certains supports magnétiques (bandes vidéo, cartes magnétiques) impliquent l'enregistrement d'informations avec une densité très élevée. La densité avec laquelle les informations peuvent être enregistrées sur la bande dépend du champ coercitif (Hc), de l'induction rémanente (Br), du facteur de forme du cycle d'hysteresis (R_{S} = Br/Bm, Bm étant l'induction rémanente maximale qu'il est possible d'obtenir), et de l'uniformité de la surface de la couche magnétique.

Lorsqu'un support magnétique se déplace par rapport à une tête magnétique, la couche de matériau magnétique est en contact intime avec la tête. Cependant la couche de matériau magnétique comporte de nombreuses irrégularités, et la tête magnétique n'est en contact qu'avec les parties convexes de ces irrégularités. L'existence de ces irrégularités provoque d'une part une usure plus rapide de la tête magnétique utilisée, et d'autre part, provoque, aux têtes d'enregistrement et de lecture en contact direct avec la couche magnétique, des effets de distance qui se traduisent par une modulation de l'amplitude ou une fluctuation des signaux enregistrés ou lus, diminuant ainsi, le rapport signal/bruit obtenu.

Les causes de ces irrégularités perturbatrices de la surface de la couche sont, comme on le sait, des irrégularités ou défauts de la feuille support dus par exemple à des matières de charge minérales que les fabricants de feuilles incorporent souvent à la matière des supports pour que l'enroulement et la manipulation des blocs de feuilles soient meilleurs. L'aspect microscopique de ces surfaces de feuilles est le suivant : il apparaît sur une surface unie et lisse des élévations distantes les unes des autres de quelques microns formées par des particules de matière de charge, relativement effilées, qui saillent jusqu'à 0,3 µm au dessus de la surface moyenne de la feuille. Dans le cas de couches magnétiques de l'ordre de 5 µm d'épaisseur et même moins parfois, utilisées pour certaines cartes magnétiques, ces élévations sont très peu recouvertes et nivelées de telle sorte qu'elles percent souvent à la surface de la couche magnétique.

D'autres causes d'irrégularités de la couche sont les défauts d'enduction tels que ceux, par exemple, provoqués par les défauts de fonctionnement de la machine d'enduction ou de vibrations du système de transport de la feuille.

Dans la technique antérieure, on sait qu'il est possible d'inclure dans le procédé de fabrication, un traitement de surface, comme le calandrage de la couche magnétique, de façon à améliorer l'état de la surface et à augmenter la densité de particules magnétiques de la couche de matériau magnétique. Le brevet EP 139 403 décrit un procédé de lissage d'une surface magnétique dans lequel on fait passer la bande magnétique entre un rouleau tournant, en acier poli, et un rouleau élastique, avec une pression et une température convenables. Le milieu magnétique se trouve en contact avec le rouleau en acier poli, ce qui lui confère le brillant recherché, tandis que le support est en contact avec le rouleau élastique qui absorbe les irrégularités du support. La surface des cylindres utilisés présente une rugosité arithmétique de l'ordre de 30 à 40 nm.

Cependant, avec de tels dispositifs, il est difficile d'obtenir des couches magnétiques dont la rugosité arithmétique est inférieure à 20 nm. En réalité, si l'on veut obtenir un meilleur état de surface, cela implique le passage successif de la couche magnétique dans plusieurs calandres augmentant ainsi le temps de fabrication et la complexité du dispositif.

De plus si on désire obtenir de bons résultats quant à l'état de surface obtenu, il faut généralement chauffer à une température supérieure à la température de transition vitreuse du liant formant la couche magnétique. Lorsque cette température est, comme par exemple pour certains polyuréthanes, supérieure à 150°C, en raison des tensions appliquées sur la bande magnétique au cours d'un tel procédé, celle ci ne résisterait pas à de telles températures et casserait inévitablement.

D'autre part, il n'est pas possible, dans le cas d'une fabrication de cartes magnétiques, de faire passer dans de telles calandres les cartes semi-rigides terminées ; il faudrait, avec de tels dispositifs, calandrer le film magnétique après couchage et avant l'assemblage de la carte.

Le brevet DE 3 727 197 décrit des couches magnétiques de très faible épaisseur dans lesquelles le pourcentage en poids de poudre magnétique représente 66 à 90 % de la couche magnétique et dont la rugosité arithmétique est comprise entre 10 et 15 nm.

Ainsi, l'invention a-t-elle pour objet un procédé simple de traitement de surface de couches magnétiques permettant d'obtenir une rugosité arithmétique nettement inférieure à celle que l'on obtenait dans les dispositifs de la technique antérieure.

C'est un autre objet de la présente invention que de fournir un procédé permettant à la fois d'améliorer l'état de surface de la couche magnétique, de réticuler le liant formant la couche magnétique et de souder entre elles plusieurs feuilles d'un matériau formant le support de la couche magnétique. D'autres objets de la présente invention apparaîtront au cours de la description plus détaillée qui va suivre.

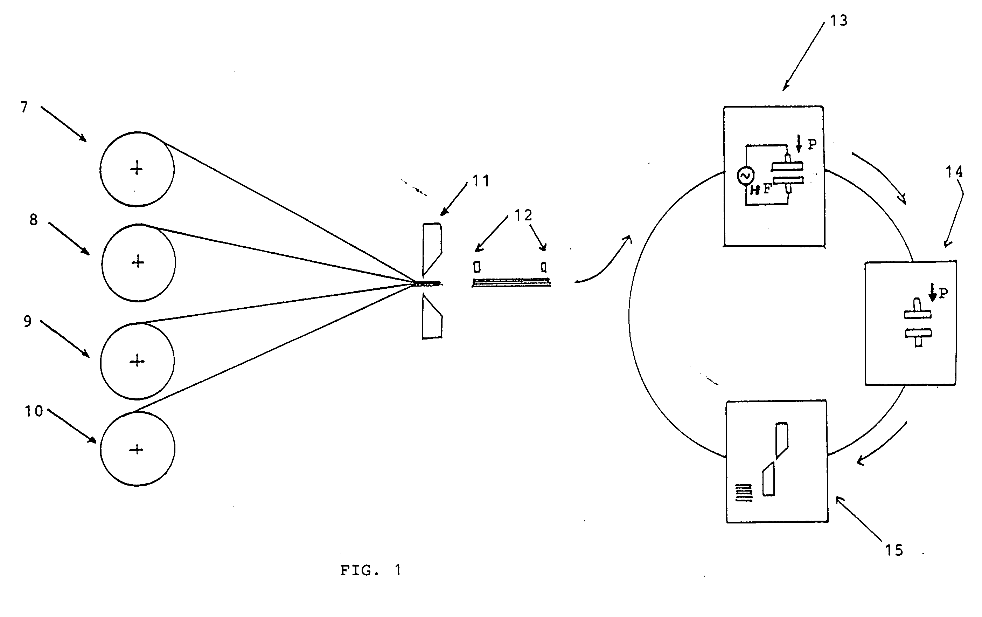

La description qui va suivre sera faite en faisant référence à la figure 1 qui représente de façon schématique un dispositif de mise en oeuvre du procédé selon l'invention dans le processus de fabrication d'une carte magnétique à haute densité.

Le procédé selon l'invention concerne un procédé de traitement de surface d'une feuille magnétique, comprenant un support sur lequel on applique une couche magnétique, sur au moins une de ses faces, dans lequel on chauffe la feuille magnétique et on lui applique une pression, au travers d'une plaque de verre poli, ledit procédé étant caractérisé en ce que l'on chauffe la couche magnétique à une temperature supérieure à la température de transition vitreuse du liant contenu dans la couche magnétique.

Selon la présente invention, le glaçage et le compactage de la couche magnétique sont réalisés grâce à l'utilisation de plaques de verre que l'on met en contact avec la couche magnétique. Ainsi, suivant que l'on a un support ayant une couche magnétique sur l'une de ses faces ou sur ses deux faces, on utilisera une ou deux plaques de verre. On réalise alors un sandwich constitué de la feuille magnétique qui peut être collée ou soudée à un support en plastique tel que du PVC ou du polycarbonate par exemple et d'une plaque de verre que l'on met en contact avec chaque surface magnétique de ladite feuille.

La couche magnétique peut être à titre d'exemple, ainsi que décrit dans la demande de brevet FR 88 14219, obtenue de la manière suivante : les particules magnétiques utilisées sont des particules d'hexaferrite de Ba ou de Sr ayant un champ coercitif élevé, supérieur à 4000 Oe et de préférence, supérieur à 5000 Oe. Un tel champ coercitif élevé assure la sécurité des informations enregistrées qui sont ineffaçables par des champs externes courants, tout en conservant une capacité de réinscription par écrasement.

Un procédé de préparation d'hexaferrites préféré est celui qui fait l'objet de la demande de brevet FR 88 14221.

Dans un mode de réalisation, on utilise des particules d'hexaferrite de Ba ou de Sr ayant un indice de forme d'au moins 2 : 1, une longueur comprise entre 0,1 et 0,3 µm, et un champ coercitif supérieur à 4000 Oe.

Le milieu comprend un liant formé d'un polyuréthanne tridimensionnel hautement réticulé et un polytétrafluoroéthylène comprenant éventuellement du polyéthylène.

Selon un mode de réalisation, le polyuréthane tridimensionnel hautement réticulé est formé à partir (a) d'un polyol ramifié de poids moléculaire moyen inférieur à 4000 contenant au moins 8 % en masse de groupes OH et (b) d'un prépolymère d'un isocyanate comprenant au moins trois fonctions isocyanate. On peut utiliser comme polyol des polyester-polyols aromatiques ou aliphatiques ou des polyéther-polyols.

Comme prépolymère d'isocyanate, on peut utiliser tout composé utilisé habituellement dans la chimie des polyuréthannes, éventuellement en mélange, dans la mesure où il a au moins 3 groupes isocyanate.

De tels composés peuvent être obtenus par exemple, à partir de 3 moles d'un diisocyanate apliphatique ou aromatique et d'une mole d'un alcool trivalent tel que le glycérol, l'hexanetriol ou le triméthylolpropane.

Le mélange de liants est présent dans le milieu d'enregistrement magnétique à raison de 10 à 60 g pour 100 g de particules magnétiques.

Le milieu magnétique comprend, en outre, comme il est connu, un certain nombre d'additifs tels que des agents tensioactifs, des lubrifiants, des pigments, etc. Ces additifs ne doivent pas être susceptibles d'exsuder de la couche et d'en perturber la surface.

Il est connu d'introduire dans les couches magnétiques des lubrifiants, afin de réduire le coefficient de frottement entre la couche et la tête, de diminuer l'usure de l'une et de l'autre, et d'améliorer les propriétés de glissement de la couche.

Les lubrifiants liquides ne sont pas appropriés, car ils ont tendance à exsuder du milieu magnétique par élévation de température, et en particulier quand le traitement final du support magnétique exige des températures élevées. Quant aux lubrifiants solides connus, tels que ceux à base de polytétrafluoroéthylène (PTFE), ils sont incompatibles avec les compositions de liants magnétiques habituellement utilisées et contribuent à diminuer la cohésion du milieu magnétique. En outre, ils se dispersent mal, forment des agglomérats et donnent des compositions non homogènes qui, lors de l'utilisation du milieu magnétique, laissent échapper des particules de lubrifiant.

C'est pourquoi on utilise de préférence comme lubrifiant un polytétrafluoroéthylène en poudre, contenant éventuellement du polyéthylène, dans lequel plus de 90 %, et de préférence plus de 99 % des particules, ont une dimension inférieure à 3 µm, à raison de moins de 2 % en masse par rapport à la masse des particules magnétiques.

On peut utiliser par exemple un PTFE en poudre vendu par Dupont de Nemours sous la dénomination de Vydax®, à condition qu'il réponde aux exigences de dimension de particules indiquées ci-dessus.

Les autres additifs sont ceux couramment utilisés dans les milieux d'enregistrement magnétique.

Un ou plusieurs agents tensio-actifs sont indispensables pour assurer la mouillabilité, la dispersabilité et l'étalement de la dispersion. Il est avantageux d'utiliser un agent tensio-actif qui soit fixé chimiquement à la surface des particules magnétiques. On peut utiliser, par exemple, un ester d'acide polycarboxylique ou un ester organique complexe d'acide phosphorique. On peut utiliser aussi comme agent de dispersion un copolymère vinylique à base de chlorure de vinyle comprenant des groupes OH. Un tel copolymère comprend en général de 70 à 90 % de chlorure de vinyle, les autres monomères étant choisis parmi l'acétate de vinyle, l'alcool polyvinylique, et des esters acryliques ou méthacryliques portant éventuellement des groupes hydroxyle. Dans ce cas, la quantité de composés contenant des groupes isocyanates doit être calculée de façon à tenir compte des groupes OH du copolymère vinylique, qui doit être lui aussi complètement réticulé dans le réseau tridimensionnel du polyuréthanne. Dans un mode de réalisation préféré, on utilise un alkylphénoxypolyéthoxyéthyl ester de l'acide phosphorique, à raison de 3 à 8 g pour 100 g de particules magnétiques et un copolymère vinylique à raison de moins de 10 % en masse par rapport au liant total.

En outre, la composition de liants comprend les additifs habituels tels que des poudres abrasives comme Al₂O₃ ou Cr₂O₃, des pigments, sous forme de poudre fine ou de colloïde, tels que du noir de carbone pour colorer la couche et de la silice pour améliorer la qualité et la stabilité de la dispersion.

Enfin elle peut éventuellement contenir des agents pour favoriser la réticulation, suivant le liant utilisé et la cinétique que l'on souhaite.

On forme une dispersion de couchage en mélangeant les particules magnétiques, les différents composants du liant et les additifs, en présence de solvants. On utilise des mélanges solvants connus dans la technique des dispersions magnétiques.

Parmi les solvants utiles, on peut citer des esters tels que l'acétate de méthyle, l'acétate d'éthyle, l'acétate d'isopropyle,le tétrahydrofuranne, des cétones telles que la méthyléthylcétone, la méthylisobutylcétone et la cyclohexanone, le nitrométhane, le nitroéthane, le dichloroéthane, etc. Les quantités utiles de solvants peuvent être déterminées par le technicien en fonction des résultats souhaités, des composés particuliers de la dispersion et de l'appareillage utilisé.

La composition de liants est appliquée ensuite sur un support de film. Dans le cas d'une carte magnétique ce support de film doit donc être compatible avec les autres feuilles de plastique constituant la carte ; il doit en particulier pouvoir être soudé à chaud avec ces feuilles. Il contribue d'autre part aux propriétés finales de la carte ; il doit donc être stable en dimension, résistant à la température et élastique. On peut utiliser tout support en matière plastique polymère répondant à ces exigences ; il peut être collable à chaud sur les feuilles de plastique constituant la carte, avec ou sans couche adhésive supplémentaire.

Après couchage, on oriente éventuellement longitudinalement les particules magnétiques par tout procédé connu, puis on sèche . La couche obtenue a une épaisseur à l'état sec inférieure à 10 µm et de préférence à 6 µm.

Dans le procédé selon la présente invention, le verre utilisé sera en général un verre poli dont la rugosité arithmétique peut atteindre 3 à 4 nm et qui doit présenter certaines caractéristiques. Il doit en effet être capable de résister aux chocs thermiques (particulièrement lorsque l'on réalise un chauffage par haute fréquence) ainsi qu'à la compression. On peut à cet effet utiliser un verre trempé ou une vitro-céramique du type : Vision de Corning®. L'épaisseur des plaques de verre peut être à titre d'exemple comprise entre 1 et 5 mm.

En réalité, les effets produits sur la couche magnétique (glaçage, compactage) sont obtenus par la combinaison d'une pression et d'une élévation de température que l'on applique au sandwich précédemment évoqué.

Ceci peut alors être réalisé au moyen, par exemple, d'une presse thermique. On peut également, lorsque, dans le cas d'une carte magnétique, on réalise simultanément le traitement de la surface magnétique et le soudage des différentes couches formant la carte, utiliser une presse à haute fréquence (Un tel procédé de soudage est décrit dans la demande FR 88 14222, intitulée "Procédé de soudage de feuilles de polycarbonate"). Un tel procédé permet d'obtenir, outre le glaçage de la couche magnétique et le soudage des différentes feuilles formant la carte, la réticulation du liant formant la couche magnétique.

On introduit donc le sandwich entre les mâchoires de la presse. On applique alors une pression et une température donnée (dans le cas de la presse à haute fréquence, l'élévation de température se produit lors de l'application de la haute fréquence qui provoque une excitation moléculaire dans le support (exemple : PVC, polycarbonate) ou dans la couche magnétique. La température, qui doit être supérieure à la température de transition vitreuse du liant formant, pour partie, la couche magnétique, est généralement comprise entre 80 et 200°C et, dans le cas d'un liant tel que du polyuréthane tridimensionnel, est comprise entre 130 et 190°C. La pression varie suivant que l'on utilise une presse thermique ou une presse à haute fréquence et peut varier entre 100 et 2000 N/cm². Après cela, on refroidit sous pression jusqu'à ce que l'on ait atteint une température sensiblement inférieure à la température de transition vitreuse du liant de la couche magnétique et, dans le cas où le liant est du polyuréthane tridimensionnel, on refroidit sous pression jusqu'à ce que l'on ait atteint la température d'environ 90°C. Par un tel procédé, on obtient une couche magnétique dont la rugosité arithmétique est de l'ordre de 5 à 10 nm.

Dans un mode de réalisation préféré de la présente invention, on dispose une feuille d'un matériau souple, ne réagissant pas à la haute fréquence, entre les plaques de verre et les mâchoires de la presse afin d'absorber les défauts dus à une mauvaise planéité de la surface des mâchoires ou de la surface des plaques de verre, en contact avec la mâchoire. En effet, en raison de la pression exercée, il est absolument indispensable qu'il n'y ait aucune force de flexion qui s'exerce sur les plaques de verre lorsque celles-ci sont en pression. A titre d'exemple, on pourra utiliser du carton ou du Teflon®.

Selon un autre mode de réalisation, la surface en verre poli comporte en un ou plusieurs endroits déterminés une ou plusieurs inscriptions, soit en relief, soit en profondeur, qui seront, lorsque ladite plaque de verre poli sera appliquée sur la couche magnétique, transférées sur le support magnétique dans une zone qui n'est pas destinée à recevoir des pistes d'informations. On obtient ainsi un support dont la couche magnétique comporte, en profondeur ou en relief, une ou plusieurs inscriptions dans des zones prédéterminées du support. A titre d'exemple, il peut s'agir d'informations commerciales destinées à authentifier une carte magnétique ; la faible épaisseur de la couche magnétique rendrait, en effet, évidente toute modification du marquage.

On fait maintenant référence à la figure 1 illustrant un exemple de mise en oeuvre du procédé selon l'invention dans le processus de fabrication d'une carte magnétique.

La carte magnétique que l'on souhaite réaliser est une carte magnétique à haute densité constituée d'un support semi-rigide et stable en dimension portant sur la majeure partie d'au moins une de ses surfaces un milieu d'enregistrement magnétique formé de particules magnétiques. Le support de la carte et le milieu magnétique lui-même doivent posséder une déformation élastique, c'est-à-dire, pouvoir retrouver leur forme initiale, même après des courbures répétées. La carte doit en outre être thermiquement stable pour supporter sans déformation les températures courantes de l'environnement. Pour ces raisons, on a choisi de réaliser cette carte en polycarbonate à partir de plusieurs couches superposées.

Cette carte se compose donc d'un nombre de feuillets de polycarbonate compris entre 2 et 10 de manière à réaliser un sandwich dont l'épaisseur est comprise entre 400 µm et 1000 µm, l'un de ces feuillets au moins supportant une couche magnétique. Ces feuillets de polycarbonate peuvent, à titre d'exemple, être en LEXAN® (fabriqué par General Electric Co). L'épaisseur de chaque feuillet varie entre 25 et 200 µm.

La couche magnétique est, elle aussi, enduite sur un support de polycarbonate dont l'épaisseur varie entre 25 et 75 µm. L'épaisseur de la couche magnétique est de l'ordre de 5 à 10 µm.

Dans le cas de notre exemple représenté en figure 1, on réalise la carte à partir de 4 couches de polycarbonate (7), (8), (9), (10), incluant celle qui supporte la couche magnétique.

Par des dispositifs d'alimentation en rouleau, des dispositifs d'entraînement, de guidage et de centrage des bandes, on amène les bandes à se superposer parfaitement entre elles. On réalise alors, par des moyens appropriés (11), un premier découpage de façon à avoir un sandwich ayant la surface nécessaire pour réaliser 3 cartes (ou plus suivant les dimensions de la presse). Afin de maintenir les différentes couches parfaitement superposées, on réalise une première soudure (12) en chaque coin du sandwich. Cette soudure peut être réalisée par exemple au moyen d'ultra-sons. On introduit alors le sandwich dans un dispositif à plusieurs postes comprenant essentiellement une presse permettant d'appliquer la haute fréquence (13), une presse munie d'un circuit de refroidissement (14) et un dispositif de découpage des cartes individuelles (15).

Le sandwich passe en premier entre les mâchoires de la presse (13) permettant d'appliquer la haute fréquence. L'une au moins des faces du sandwich, à savoir celle qui est en contact avec la couche magnétique (si la feuille possède une couche magnétique sur chacune de ses faces, on utilise deux plaques de verre) est séparée de l'électrode métallique par une plaque de verre dont l'épaisseur est de l'ordre de 5 mm. Dans notre mode de réalisation, on utilise deux plaques de verre quel que soit le nombre de faces magnétiques. On établit alors la pression et enfin on soude en appliquant la haute fréquence. Au cours de cette étape, la température s'élève pour atteindre une température supérieure à la température de transition vitreuse du liant utilisé dans la couche magnétique, c'est-à-dire de l'ordre de 170°C. Une telle température, associée à une pression appliquée sur la couche magnétique au travers d'une plaque de verre poli dont la rugosité arithmétique est de l'ordre de 3 à 4 nm, provoque un ramollissement de la couche magnétique. La couche magnétique adopte alors un état de surface très proche de celui du matériau directement en contact avec ladite couche magnétique, en l'occurence le verre poli. De même le fait de réaliser cette opération tout en appliquant une certaine pression (comprise entre 100 et 200 N/cm²) entraîne un compactage de ladite couche magnétique. On obtient ainsi une couche magnétique dont la rugosité arithmétique est de l'ordre de 5 nm.

Il apparaît donc que les conditions nécessaires au soudage du polycarbonate par haute fréquence permettent d'obtenir le traitement de surface des couches magnétiques. Ainsi, par une même opération, on réalise à la fois le soudage de la carte et le traitement de surface de la couche magnétique.

Dans notre mode de réalisation, les conditions opératoires sont les suivantes :
- Surface du sandwich à souder : 200 mm x 90 mm
- Puissance de la presse : 6 KW
- Fréquence HF : 27,12 MHz.
- Pression sur le sandwich : 100 à 200 N/cm²
- Intensité fournie par le générateur : 1,5 A
- Temps d'application de la HF : ≃ 10 s.

Après cela, avant de pouvoir libérer le sandwich, il faut le refroidir ; en effet, en fin de soudage, la température de l'ensemble est de l'ordre de 170°C. Ce refroidissement, en raison de la planéité des surfaces requise pour une telle application, est fait en maintenant la pression utilisée lors du soudage. Cela peut être réalisé dans la presse que l'on utilise pour le soudage. Il faut compter alors environ 30 s pour redescendre à la température souhaitée (environ 30 à 35°C). Dans notre mode de réalisation, afin de libérer plus rapidement la presse à haute fréquence, on prévoit une autre presse (14) munie d'un circuit de refroidissement, un système approprié étant prévu pour assurer le transfert du sandwich sous pression dans ladite presse de refroidissement.

Lorsque la température souhaitée est atteinte, on évacue le sandwich vers un poste de découpe (15) où l'on réalise alors les cartes individuelles.

Ce dispositif à postes successifs permet ainsi de fabriquer de telles cartes en série et d'une manière complètement automatisée.

Dans la description qui vient d'être faite, on décrit un mode de réalisation dans lequel les opérations de glaçage de compactage de la couche sont effectuées simultanément avec l'opération de soudage des différentes feuilles formant la carte, mais il est bien évident que ces opérations peuvent également être faites indépendamment de toute autre opération.

Un tel procédé de traitement de surface améliore non seulement la microrugosité de la couche magnétique mais également la macrorugosité de cette couche, la microrugosité (de l'ordre de 5 nm) se définissant au niveau de la couche magnétique alors que la macrorugosité se définit au niveau du support lui-même.

Un tel procédé de traitement de surface en statique n'est pas limité à la fabrication de cartes magnétiques. Il peut aussi être utilisé, notamment pour la fabrication de disques magnétiques.

## Revendications

1. Procédé de traitement de surface d'une feuille magnétique, comprenant un support sur lequel on applique une couche magnétique sur au moins une de ses faces, dans lequel on chauffe la feuille magnétique et on lui applique une pression au travers d'une plaque de verre poli, ledit procédé étant caractérisé en ce que l'on chauffe la couche magnétique à une température supérieure à la température de transition vitreuse du liant contenu dans la couche magnétique.

2. Procédé selon la revendication 1 dans lequel le support de la couche magnétique est du polycarbonate.

3. Procédé selon la revendication 1 dans lequel le support de la couche magnétique est du PVC.

4. Procédé selon l'une quelconque des revendications 1 à 3 dans lequel le chauffage est réalisé au moyen d'une presse à haute fréquence.

5. Procédé selon l'une quelconque des revendications 1 à 3 dans lequel le chauffage est réalisé au moyen d'une presse thermique.

6. Procédé selon l'une quelconque des revendications 1 à 5 dans lequel on dispose une feuille d'un matériau souple entre les plaques de verre et le dispositif au moyen duquel on applique la pression.

7. Procédé selon l'une quelconque des revendications 1 à 6 dans lequel le liant utilisé pour réaliser la couche magnétique est du polyuréthane tridimensionnel.

8. Procédé selon l'une quelconque des revendications 1 à 7 dans lequel l'épaisseur de la plaque de verre utilisée est comprise entre 1 et 5 mm.

## Patentansprüche

1. Verfahren zur Behandlung der Oberfläche einer Magnettonfolie mit einem Träger, der auf mindestens einer seiner Seiten eine Magnetschicht aufweist, bei dem die Magnettonfolie erhitzt wird und der Einwirkung von Druck durch eine polierte Glasoberfläche ausgesetzt wird, dadurch gekennzeichnet, daß die Magnetschicht auf eine Temperatur erhitzt wird, die höher ist als die Glasübergangstemperatur des Bindemittels der Magnetschicht.

2. Verfahren nach Anspruch 1, bei dem der Träger der Magnetschicht aus Polycarbonat hergestellt ist.

3. Verfahren nach Anspruch 1, bei dem der Träger der Magnetschicht aus PVC hergestellt ist.

4. Verfahren nach einem der Ansprüche 1 bis 3, bei dem das Erhitzen mittels einer Hochfrequenzpresse erfolgt.

5. Verfahren nach einem der Ansprüche 1 bis 3, bei dem das Erhitzen mittels einer Thermopresse erfolgt.

6. Verfahren nach einem der Ansprüche 1 bis 5, bei dem ein Blatt aus einem flexiblen Material zwischen die Glasplatten und die Vorrichtung für die Erzeugung des Druckes gebracht wird.

7. Verfahren nach einem der Ansprüche 1 bis 6, bei dem das Bindemittel der Magnetschicht ein dreidimensionales Polyurethan ist.

8. Verfahren nach einem der Ansprüche 1 bis 7, bei dem die Dicke der Glasplatte zwischen 1 bis 5 mm liegt.

## Claims

1. A process for treating the surface of a magnetic sheet, comprising a support having thereon a magnetic layer on at least one of its sides, wherein, the magnetic sheet is heated and subjected to pressure through a polished glass surface, said process being characterized in that said magnetic layer is heated to a temperature higher than the glass transition temperature of the binder of the magnetic layer.

2. A process according to claim 1 wherein the support of the magnetic layer is made of polycarbonate.

3. A process according to claim 1 wherein the support of the magnetic layer is made of PVC.

4. A process according to any of claims 1 to 3 wherein the heating is obtained by means of a high frequency press.

5. A process according to any of claims 1 to 3 wherein the heating is obtained by means of a thermal press.

6. A process according to any of claims 1 to 5 wherein a sheet of a flexible material is placed between the glass plates and the device for applying pressure.

7. A process according to any of claims 1 to 6 wherein the binder of the magnetic layer is a tridimensional polyurethane.

8. A process according to any of claims 1 to 7 wherein the thickness of the glass plate is between 1 to 5 mm.
